# NOUVEAU FASCICULE DE BREVET EUROPEEN

(11) **EP 1 197 364 B2**
(45) Date de publication et mention de la décision concernant l'opposition: **20.11.2013**
(45) Mention de la délivrance du brevet: 22.04.2009
(21) Numéro de dépôt: 01123968.8
(22) Date de dépôt: 08.10.2001
(51) Int. Cl.: B60H 1/00

(54) **Installation de climatisation de véhicule à deux zones de mixage**
Fahrzeug-Klimaanlage mit zwei Mischzonen
Vehicle air conditioning apparatus with two mixing zones

(30) Priorité: 11.10.2000 FR 0013013
(43) Date de publication de la demande: 17.04.2002
(73) Titulaire: Valeo Systèmes Thermiques, 78321 Le Mesnil St Denis Cedex (FR)
(72) Inventeur: Vincent, Philippe, 28230 Epernon (FR); Abouchaar, Nicolas, 96476 Bad Rodach (DE)
(74) Mandataire: Léveillé, Christophe

(56) Documents cités:
- EP-A- 0 212 306
- EP-A2- 0 841 201
- EP-A2- 1 110 769
- DE-A- 3 619 935
- DE-A1- 19 739 578
- FR-A- 2 621 868
- FR-A1- 2 789 629
- JP-A- 2000 062 442
- US-A- 4 453 591
- US-A- 4 582 252
- US-A- 5 186 237
- US-A- 5 738 579
- US-B1- 6 247 530

## Description

L'invention concerne une installation de chauffage/ventilation ou de climatisation de l'habitacle d'un véhicule.

Il est quelquefois souhaité, pour un confort optimal et personnalisé des occupants du véhicule, d'envoyer dans différentes zones d'occupation de l'air dont la température est réglée de manière indépendante.

En particulier, il est souhaité de pouvoir envoyer, dans au moins une zone des places avant et dans au moins une zone des places arrière, de l'air à des températures réglées de manière indépendante. Les installations connues permettant un réglage des températures dans les différentes zones présentent un canal d'air chaud situé entre un canal supérieur d'air froid et un canal inférieur d'air froid. Le canal supérieur et le canal inférieur débouchent respectivement dans une zone de mixage d'air supérieure, alimentant en air traité la zone avant du véhicule par l'intermédiaire de conduits de distribution, et dans une zone de mixage d'air inférieure, alimentant en air traité la zone arrière par l'intermédiaire de conduits arrière. FR 2 778 152 A décrit une telle installation, et divulgue in boîtier contenant des moyens de traitement d'un flux d'air à envoyer dans l'habitacle, lesdits moyens comportant au moins une première source de chaleur ou de froid et des éléments de commutation commandés de manière à définir des trajets variables pour ledit flux d'air entre au moins une entrée et diverses sorties associées à des régions respectives de l'habitacle, le boîtier définissant une première zone de mixage reliée à au moins l'une desdites sorties et une seconde zone de mixage reliée à au moins une autre desdites sorties, chacune desdites zones de mixage pouvant recevoir en des proportions réglables un premier flux d'air ayant traversé ladite première source et un second flux d'air ayant contourné celle-ci. Le document DE 197 39 578 divulgue toutes les caractéristiques de la partie préambule de la revendication 1.

La présence du canal supérieur d'air froid allonge le trajet de l'air chaud entre le radiateur de chauffage et la sortie de dégivrage, qui se situe à la partie supérieure du boîtier, et par conséquent le temps nécessaire à cet air pour parvenir à cette sortie. Or, la rapidité d'accès de l'air chaud à la sortie de dégivrage est un élément important lorsqu'un dégivrage ou un désembuage rapide est requis pour des raisons de sécurité.

Le but de l'invention est de raccourcir le trajet de l'air entre le radiateur de chauffage et la sortie de dégivrage, et plus généralement entre la première source de chaleur ou de froid et les sorties associées à la première zone de mixage.

L'invention vise notamment une installation du genre défini en introduction, et prévoit que lesdits seconds flux d'air contournent tous deux la première source par le dessous.

Des caractéristiques optionnelles de l'invention, complémentaires ou alternatives, sont énoncées ci-après:
- La première zone de mixage est reliée à au moins une sortie associée à une région avant de l'habitacle et la seconde zone de mixage est reliée à au moins une sortie associée à une région arrière de l'habitacle.
- Ladite première source est une source de chaleur et les moyens de traitement comportent en outre une source de froid que lesdits premiers et seconds flux d'air traversent avant de traverser ou de contourner la source de chaleur.
- Le boîtier définit une conduite de contournement unique au-dessous de la première source et des moyens pour subdiviser, dans la direction latérale du boîtier, un second flux d'air ayant circulé dans ladite conduite de contournement en au moins une première fraction dirigée vers la première zone de mixage et une seconde fraction dirigée vers la seconde zone de mixage.
- Lesdits moyens pour subdiviser le second flux d'air comprennent une première cloison sensiblement verticale juxtaposée latéralement à la seconde zone de mixage.
- Le boîtier définit au-dessous de la première source une première conduite de contournement reliée à la première zone de mixage et une seconde conduite de contournement aboutissant à la seconde zone de mixage, mutuellement juxtaposées dans la direction latérale du boîtier, la seconde conduite de contournement et la seconde zone de mixage étant séparées de la première conduite de contournement par une première cloison sensiblement verticale.
- Ladite seconde conduite de contournement comporte un volet pouvant se déplacer entre une position extrême obturant l'entrée de ladite seconde conduite et une autre position extrême où il interdit l'accès de l'air à une partie de la première source.
- Ledit volet s'étend de manière continu dans le boîtier pour se déplacer entre une position extrême d'obturation simultanée de la première conduite de contournement et de la seconde conduite de contournement et une autre position extrême où il interdit l'accès de l'air à une partie de la première source.
- Ledit volet est constitué par au moins deux volets, lesdits volets pouvant se déplacer indépendamment entre une position extrême pendant laquelle il obture simultanément une partie de la première conduite de contournement et une partie de la seconde conduite de contournement et une autre position extrême où il interdit l'accès de l'air à une partie de la première source.
- Ledit volet est constitué par trois volets, deux de ces volets pouvant se déplacer indépendamment entre une position extrême pendant laquelle il obture une partie de la première conduite de contournement et une autre position extrême où il interdit l'accès de l'air à une partie de la première source, le troisième volet pouvant se déplacer indépendamment entre une position extrême pendant laquelle il obture la seconde conduite de contournement et une autre position extrême où il interdit l'accès de l'air à une partie de la première source.
- Ladite première cloison se raccorde à une paroi intermédiaire et traverse une paroi externe s'étendant toutes deux dans la direction latérale et délimitant la ou les conduites de contournement, la paroi intermédiaire séparant ces dernières de la première source.
- Ladite paroi intermédiaire est propre à assurer une isolation thermique entre la première source et l'intérieur de la ou des conduites de contournement.
- La première zone de mixage présente une étendue dans la direction latérale coïncidant sensiblement avec celle de la conduite de contournement ou de l'ensemble des conduites de contournement et est séparée de la seconde zone de mixage par une seconde cloison s'étendant dans cette même direction et se raccordant à la première cloison.
- Le boîtier comprend un corps principal logeant la première source et définissant la première ou unique conduite de contournement, et au moins une pièce rapportée formant les première et seconde cloisons et définissant une conduite de sortie s'étendant à l'extérieur du corps principal jusqu'à ladite autre sortie.
- Les première et seconde zones de mixage communiquent avec un volume unitaire situé immédiatement en aval de la première source.
- Les première et seconde zones de mixage communiquent avec des volumes respectifs situés immédiatement en aval de la première source de part et d'autre d'une cloison séparatrice s'étendant dans la direction latérale.
- Ladite cloison séparatrice est formée par ladite pièce rapportée.
- Ladite cloison séparatrice est propre à pivoter autour d'un axe sensiblement horizontal pour faire varier la taille relative desdits volumes respectifs.
- Le boîtier est sensiblement symétrique par rapport à un plan vertical et définit au moins une seconde zone de mixage située dans une position médiane et, de part et d'autre de celle-ci, au moins une conduite de sortie gauche et au moins une conduite de sortie droite raccordées en aval de la première zone de mixage.
- Le boîtier est sensiblement symétrique par rapport à un plan vertical et définit au moins une conduite de sortie raccordée en aval de la première zone de mixage et située dans une position médiane et, de part et d'autre de celle-ci, une seconde zone de mixage gauche et une seconde zone de mixage droite.
- Le boîtier définit au-dessous de la première source une conduite de contournement unique reliée à la première zone de mixage, la conduite de contournement et la première zone de mixage présentant une étendue dans la direction latérale qui coïncide sensiblement avec celle de la première source, ainsi qu'au moins une première conduite de dérivation et une seconde conduite de dérivation partant respectivement d'un volume situé immédiatement en aval de la première source et de la conduite de contournement pour aboutir à la seconde zone de mixage, lesdites conduites de dérivation et la seconde zone de mixage étant décalées latéralement par rapport à la première source.
- Le boîtier définit au-dessous de la première source une première conduite de contournement reliée à la première zone de mixage et une seconde conduite de contournement aboutissant à la seconde zone de mixage et située au-dessous de la première conduite de contournement.
- Lesdites conduites de contournement et lesdites zones de mixage présentent une étendue dans la direction latérale qui coïncide sensiblement avec celle de la première source, le boîtier définissant en outre au-dessous de la première source au moins une conduite de dérivation partant d'un volume situé immédiatement en aval de la première source pour aboutir à la seconde zone de mixage, ladite conduite de dérivation étant décalée latéralement par rapport à la première source.
- Il est prévu pour régler le débit du premier flux d'air à l'entrée de la première zone de mixage un volet propre à pivoter autour d'un axe situé à l'intérieur de celle-ci, ce volet ayant une forme cylindrique de génératrice parallèle audit axe et comportant en section transversale une région médiane en forme d'arc de cercle centrée sur l'axe, se raccordant à deux régions marginales qui s'éloignent de l'axe, lesdites régions marginales venant en appui sur une paroi séparatrice pour définir une position de fermeture étanche du volet.

Les caractéristiques et avantages de l'invention seront exposés plus en détail dans la description ci-après, en se référant aux dessins annexés.

La figure 1 est une vue schématique en coupe, selon la ligne I-I de la figure 5, montrant le boîtier d'une installation de climatisation selon l'invention et les composants essentiels contenus dans celui-ci.

La figure 2 est une vue en coupe selon la ligne II-II de la figure 5.

Les figures 3 et 4 sont des vues analogues à la figure 1, montrant des boîtiers modifiés qui peuvent être obtenus par un aménagement mineur de l'outillage servant à fabriquer le boîtier représenté sur la figure 1.

La figure 5 est une vue schématique en coupe selon la ligne V-V de la figure 1.

Les figures 6 et 7 sont des vues analogues à la figure 5, montrant les boîtiers des figures 3 et 4 respectivement.

Les figures 8 à 15 sont des vues analogues à la figure 1, relatives à des variantes de l'installation.

Les figures 16 à 18 sont des vues analogues à la figure 5, relatives à d'autres variantes.

La figure 19 est une vue analogue à la figure 2, relative à une autre installation selon l'invention.

Les figures 20 à 24 sont des détails de la figure 19 faisant apparaître des modifications de l'installation.

La figure 25 est une vue analogue à la figure 19, montrant d'autres modifications.

Les figures 26 et 27 sont des vues analogues aux figures 1 et 2 respectivement, relatives à une autre installation selon l'invention.

Dans la présente description, le terme "continu" qualifie un composant qui s'étend sensiblement sur toute la largeur du boîtier, dans la direction gauche-droite du véhicule, et qui ne peut donc pratiquement pas être contourné latéralement par le flux d'air qui circule dans celui-ci.

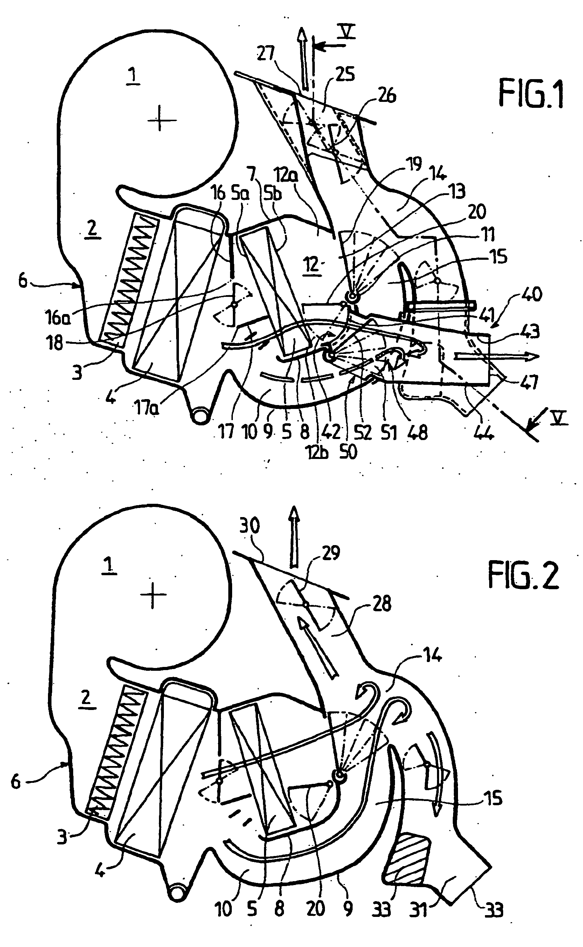

L'installation illustrée sur les figures 1, 2 et 5 comprend un pulseur 1 propre à faire circuler un flux d'air dans une conduite 2, un filtre 3 et un évaporateur 4 disposés dans la conduite 2, et un radiateur de chauffage 5 disposé en aval de l'évaporateur dans le trajet du flux d'air. Ces composants, ainsi que des cloisons et des volets pivotants qui seront décrits plus loin, sont logés dans un corps principal de boîtier 6. Le radiateur 5 est continu et s'étend sensiblement depuis une paroi supérieure 7 jusqu'à une paroi intermédiaire 8, elles-mêmes continues. La paroi intermédiaire 8 délimite, avec une paroi inférieure 9 du corps 6, une conduite de contournement continue 10 qui passe au-dessous du radiateur 5. Le radiateur 5 est orienté de telle manière que sa face avant 5a ou face d'entrée d'air et sa face arrière 5b ou face de sortie d'air forment un petit angle avec la verticale. La paroi supérieure 7 se prolonge vers l'arrière du radiateur, et la paroi intermédiaire 8 se prolonge également vers l'arrière en remontant en regard de la face 5b, jusqu'à un bord supérieur horizontal 11. Les parois 7 et 8 délimitent entre elles un volume 12 adjacent à la face 5b, communiquant directement par une ouverture 13 avec une première zone de mixage 14. L'ouverture 13 est continue et s'étend en hauteur du bord 11 jusqu'au niveau de la paroi 7.

La paroi 9 se prolonge également à l'arrière du radiateur 5 en s'incurvant vers le haut pour délimiter avec le prolongement de la paroi intermédiaire 8 une conduite arrière 15 qui communique avec la conduite de contournement 10 et aboutit à la zone de mixage 14.

Une cloison continue 16 s'étend vers le bas à partir de la paroi supérieure 7, entre l'évaporateur 4 et la face avant 5a du radiateur, son bord inférieur 16a se situant à une certaine distance au-dessus du bord avant 17a d'une cloison continue 17 qui s'étend vers l'avant à partir de la face 5a. L'intervalle entre les bords 16a et 17a peut être obturé ou libéré par un volet de mixage 18 de type papillon. Le volet 18 est commandé en synchronisme avec un autre volet de mixage 19, de type drapeau, monté pivotant autour d'un axe s'étendant selon le bord 11, entre une position extrême, représentée en trait plein sur les figures 1 et 2, dans laquelle il obture l'ouverture 13, et une autre position extrême dans laquelle il obture la sortie de la conduite 15 vers la zone de mixage 14. Un autre volet 20 du type drapeau, continu comme les volets 18 et 19, dont l'axe de rotation est proche du bord 11 et dont le bord opposé est proche de la face 5b, subdivise le volume 12 de manière non étanche entre un sous-volume supérieur 12a et un sous-volume inférieur 12b.

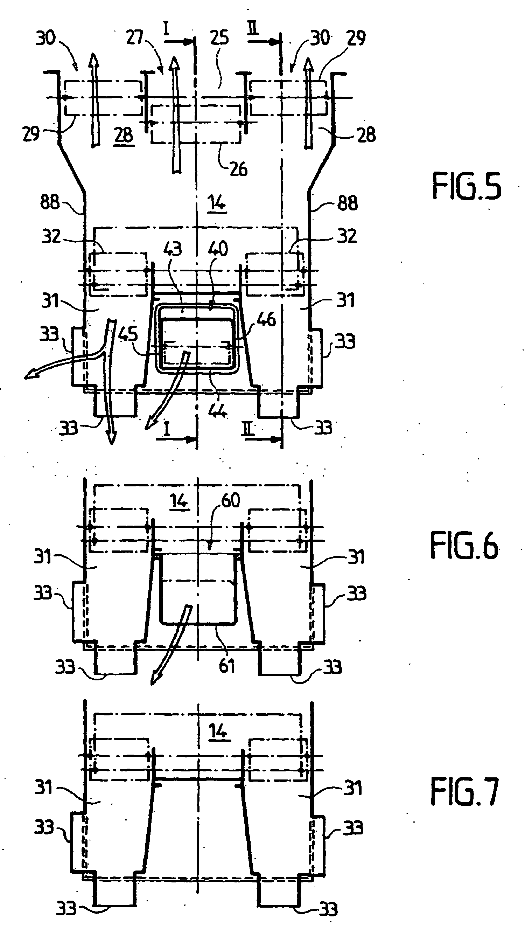

Comme on le voit sur la figure 5, la zone de mixage continue 14 communique vers le haut avec une conduite de sortie centrale 25 contenant un volet de réglage 26 et aboutissant à une sortie de dégivrage 27, et avec des conduites de sortie gauche et droite 28 contenant des volets de réglage 29 et aboutissant à des sorties 30 destinées à l'aération des parties gauche et droite de l'habitacle du véhicule.

De même, la zone de mixage 14 communique vers le bas avec des conduites de sortie gauche et droite 31, qui passent en arrière de la conduite 15, contenant des volets de réglage 32 et aboutissant à diverses sorties 33 desservant les zones de pieds des places avant du véhicule.

Le boîtier de l'installation comprend, outre le corps principal 6, une pièce rapportée 40 qui a la forme générale d'un tube à section rectangulaire variable. La pièce 40 s'étend sur une partie médiane de la largeur du boîtier, intermédiaire entre les conduites de sortie inférieures 31. Le tube 40 est orienté sensiblement dans la direction avant-arrière, son extrémité avant 41 s'inscrivant dans une ouverture 42 ménagée à cet effet dans la cloison 8, de telle sorte que l'intérieur du tube communique avec le sous-volume 12b. Le tube 40 est composé d'une paroi supérieure 43, d'une paroi inférieure 44 et de parois gauche et droite verticales 45, 46, les parois 43, 45 et 46 s'étendant des bords de l'ouverture 42 à l'extrémité arrière 47 du tube, formant ouverture de sortie, et traversant une ouverture 48 ménagée à cet effet dans la paroi externe 9 du corps 6, et la paroi 44 s'étendant du bord inférieur de l'ouverture 48 à l'extrémité arrière 47. L'intérieur du tube 40 communique donc, d'une part avec le sous-volume 12b par l'ouverture 42, d'autre part avec la conduite de contournement 10 à travers une ouverture 50 s'étendant entre le bord inférieur de l'ouverture 42 et le bord avant de la paroi 44. L'intérieur du tube forme ainsi une seconde zone de mixage 51 pouvant recevoir de l'air réchauffé par le radiateur 5 et de l'air non réchauffé provenant de la conduite 10. Un volet de mixage 52 logé dans la zone 51 peut se déplacer entre une position extrême indiquée en trait plein sur la figure 1, dans laquelle il obture l'entrée d'air réchauffé, et une position extrême indiquée en trait interrompu dans laquelle il obture l'entrée d'air froid. L'air mixé sortant par la sortie 47 est envoyé dans une région de l'habitacle autre que celles desservies à partir de la zone de mixage 14, par exemple vers les places arrière.

L'invention permet de régler indépendamment la température de l'air dans les deux zones de mixage, tout en assurant un trajet d'air chaud vers l'ouverture de dégivrage 27 le plus court possible compte tenu de l'emplacement réservé au boîtier dans le véhicule.

Pour atteindre la zone de mixage 14, l'air froid provenant de la conduite 10 passe latéralement de part et d'autre de la pièce 40. Le volet 20, selon sa position, permet de canaliser l'air chaud, soit pour partie vers la zone de mixage 14 et pour partie vers la zone de mixage 51, soit en totalité vers la zone de mixage 14.

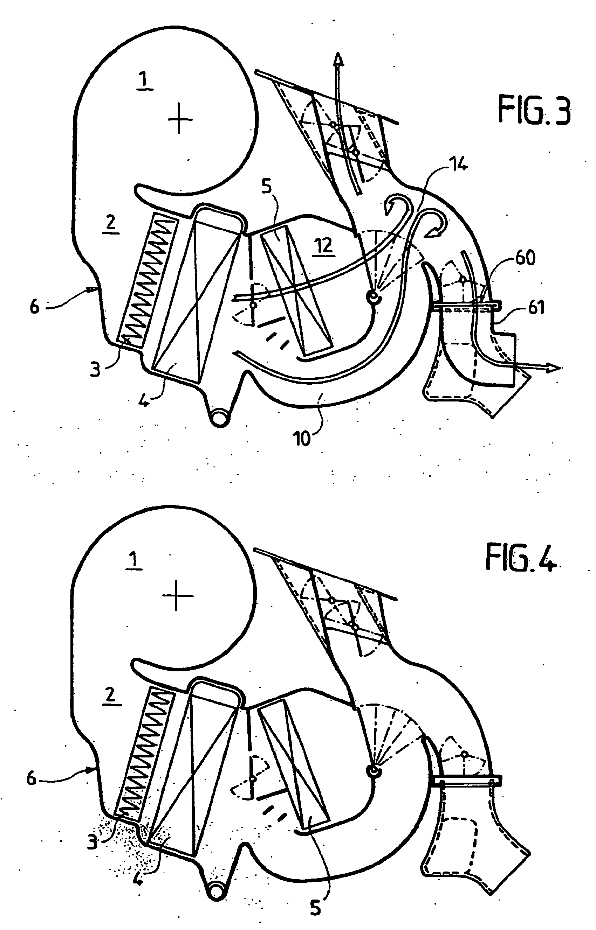

Les figures 3, 4, 6 et 7 illustrent des installations non conformes à l'invention et montrent qu'on peut obtenir, par des aménagements mineurs d'un même outillage, un boîtier pour une installation selon l'invention et des boîtiers pour des installations simplifiées destinées à d'autres versions d'un même véhicule de base.

Plus précisément, pour ces autres installations, le moule servant à réaliser le corps principal 6 du boîtier est modifié, par élimination d'éléments amovibles, pour supprimer les ouvertures 42 et 48, la pièce rapportée 40 étant également supprimée ainsi que le volet 52 monté dans celle-ci et le volet 20. L'air provenant aussi bien du volume 12 situé en aval du radiateur 5 que de la conduite de contournement 10 parvient exclusivement à la zone de mixage 14.

Dans le cas du boîtier des figures 3 et 6, une autre modification du moule permet de ménager une ouverture 60 à la base de la zone 14, entre les deux conduites 31, sur laquelle vient se monter une pièce rapportée 61 définissant une conduite de sortie qui peut être raccordée à l'habitacle de la même manière que le tube 40. Cette installation simplifiée permet d'alimenter les mêmes zones de l'habitacle que celles décrites précédemment, mais avec de l'air à la même température que celui alimentant les autres zones.

Dans le boîtier des figures 4 et 7, au contraire, l'ouverture 60 et la pièce 61 n'existent pas. On aboutit à une installation encore simplifiée possédant seulement les conduites de sortie 25, 28 et 31.

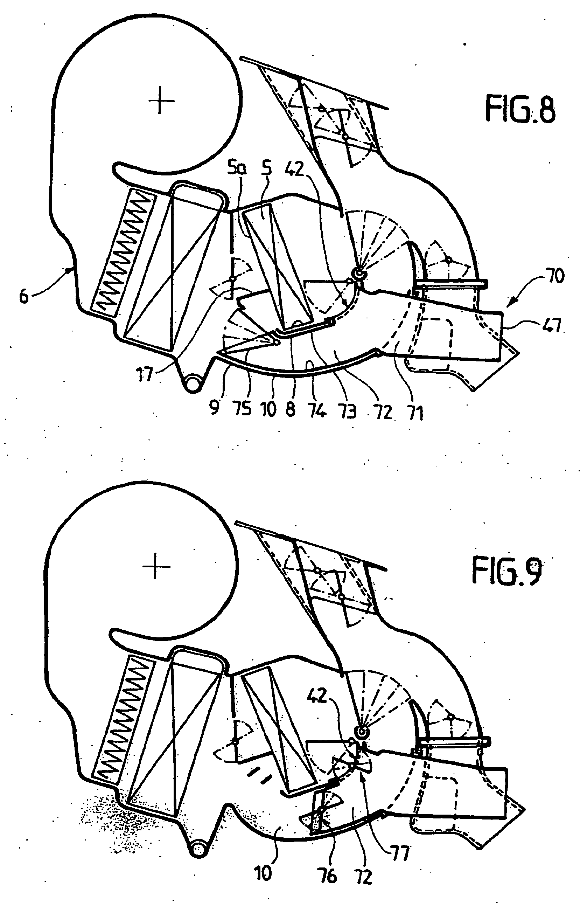

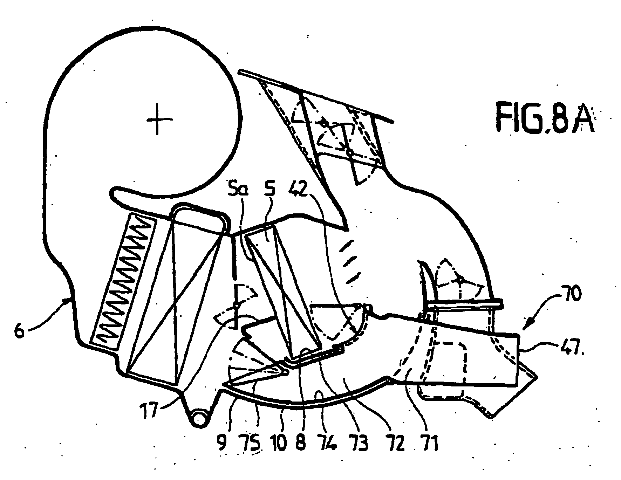

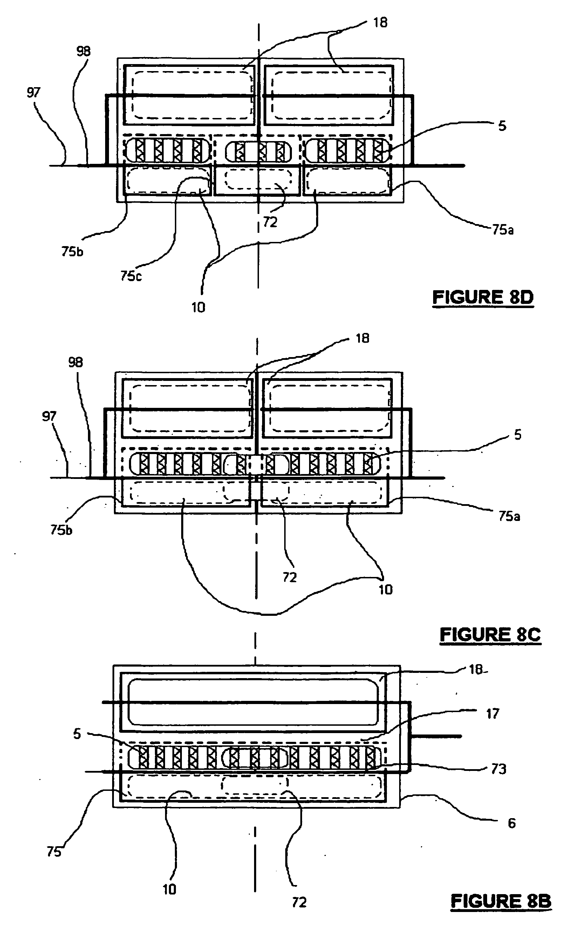

Les figures 8 et suivantes illustrent de nouveau des installations de climatisation selon l'invention.

Dans le boîtier de la figure 8, la pièce rapportée 40 décrite en relation avec les figures 1 et 5 est remplacée par une pièce 70 définissant, outre un tube 71 s'étendant comme précédemment de l'ouverture 42 à l'ouverture de sortie 47, un autre tube 72 se raccordant au tube 71 et s'engageant dans la conduite de contournement 10 dont il occupe toute la hauteur jusqu'à son extrémité amont. Le tube 72 présente à cet effet une paroi supérieure 73 adjacente à la cloison intermédiaire 8, et une paroi inférieure 74 adjacente à la paroi inférieure 9 du corps 6 du boîtier, reliées entre elles par des prolongements vers l'avant des parois latérales verticales 45, 46 (figure 5). Le volet de mixage 52 est remplacé par un volet drapeau 75 monté sur la pièce 70 à l'extrémité amont du tube 72 et pouvant se déplacer entre une position extrême où il obture l'entrée de celui-ci et une autre position extrême où il interdit l'accès de l'air à la partie de la face d'entrée 5a du radiateur 5 située au-dessous de la cloison 17.

L'installation représentée à la figure 8A est une variante de conception de la figure 8. En effet, le volet 19 est supprimé au profit du volet 75 qui pourra se décliner selon trois versions. Ce volet 75 est représenté aux figures 8A, 8B et 8C relié au volet 18 de sorte que leurs mouvements se fassent en même temps. On a représenté aussi sur cette figure les cloisons 17 et 73 délimitant le premier et le second conduit 10 et 72 ainsi que l'entrée vers le radiateur 5.

La figure 8B illustre plus particulièrement et de manière schématique la version de base du volet 75 qui s'étend sur toute la largeur du boîtier 6 de manière à obturer simultanément la première conduite de contournement 10 et la seconde conduite de contournement 72. Le volet 75 se déplace d'une position extrême dans laquelle il obture simultanément la première conduite de contournement 10 et la seconde conduite de contournement 72 à une autre position extrême où il interdit l'accès de l'air à une partie du radiateur 5 (position représentée en traits interrompus).

Une seconde version du volet 75, illustrée sur la figure 8C, employée avantageusement dans une installation à deux zones de température indépendantes, celui-ci est scindé pour former deux volets 75a et 75b, coaxiaux ou non, ayant la faculté d'obturer simultanément une partie du premier conduit de contournement 10 et une partie du second conduit de contournement 72. La température de l'air circulant dans le second conduit de contournement 72 est alors fonction de l'ouverture des volets 75a et 75b. Ces derniers se déplacent d'une position extrême dans laquelle ils obturent simultanément une partie de la première conduite de contournement 10 et une partie de la seconde conduite de contournement 72 à une autre position extrême où il interdit l'accès de l'air à une partie du radiateur 5 (position représentée en traits interrompus).

Dans une troisième version du volet 75 illustrée à la figure 8D et utilisée avantageusement dans une installation à trois zones de température indépendantes, celui-ci est scindé en trois entités indépendantes 75a, 75b, 75c, coaxiales ou non. Deux de ces entités 75a et 75b gèrent le flux d'air qui doit circuler dans les deux parties du premier conduit de contournement 10 situées de chaque cotés du second conduit de contournement 72. Ce dernier est quant à lui obturé plus ou moins par la troisième entité 75c du volet 75. L'entité 75a se déplace d'une position extrême dans laquelle il obture une partie de la première conduite de contournement 10 à une autre position extrême où il interdit l'accès de l'air à une partie du radiateur 5 (position représentée en traits interrompus). L'entité 75b se déplace d'une position extrême dans laquelle il obture une partie de la première conduite de contournement 10 à une autre position extrême où il interdit l'accès de l'air à une partie du radiateur 5 (position représentée en traits interrompus). L'entité 75c se déplace d'une position extrême dans laquelle il obture la seconde conduite de contournement 72 à une autre position extrême où il interdit l'accès de l'air à une partie du radiateur 5 (position représentée en traits interrompus). Dans le cas des conceptions illustrées aux figures 8C et 8D, on comprend que les volets 75a, 75b et 75c peuvent être coaxiaux par le jeu d'axes 97 et 98 de diamètres différents enfilés l'un dans l'autre. Mais, ces axes peuvent aussi ne pas être confondus en les disposant selon deux ou trois points différents de manière à résoudre les problèmes d'encombrement d'architecture de l'installation.

L'installation de la figure 9 diffère de celle de la figure 8 en ce que le tube 72 de la pièce rapportée 70 est plus court et ne s'étend que sur une partie de la longueur de la conduite de contournement 10. Le volet de mixage 75 est remplacé par deux volets papillons 76, 77 pouvant obturer ou libérer respectivement l'entrée du tube 72 et l'ouverture 42.

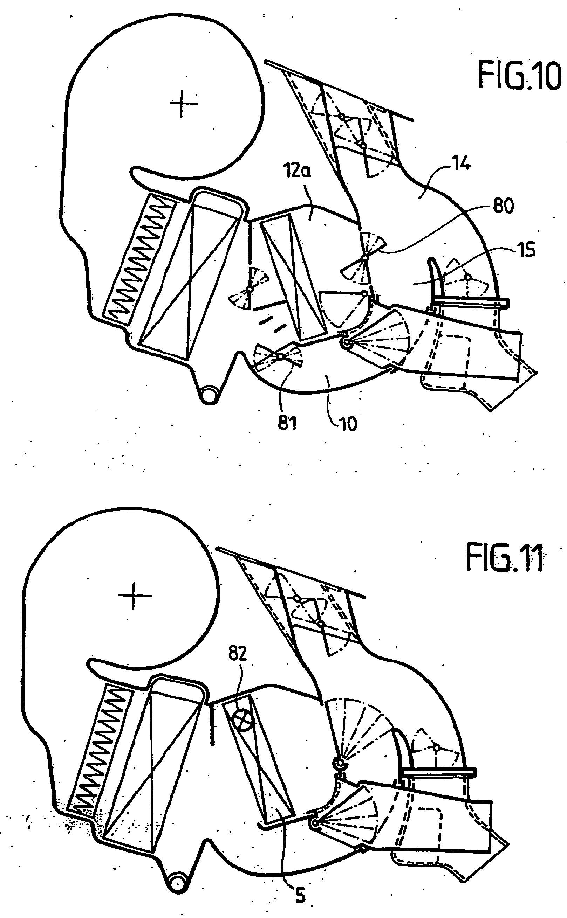

L'installation illustrée sur la figure 10 diffère de celle de la figure 1 en ce que le volet de mixage 19 de type drapeau est remplacé par un volet 80 de type papillon qui peut obturer ou libérer l'ouverture de passage entre le sous-volume 12a et la zone de mixage 14, mais ne peut obturer la sortie de la conduite d'air froid 15 vers cette même zone. Il s'y ajoute un autre volet papillon 81 propre à obturer ou à libérer l'entrée de la conduite de contournement 10.

L'installation illustrée sur la figure 11 diffère de celle de la figure 1 par la suppression de la cloison 17 et des volets 18 et 20, et par l'adjonction d'un robinet 82 permettant d'interrompre la circulation de fluide chaud dans le radiateur 5.

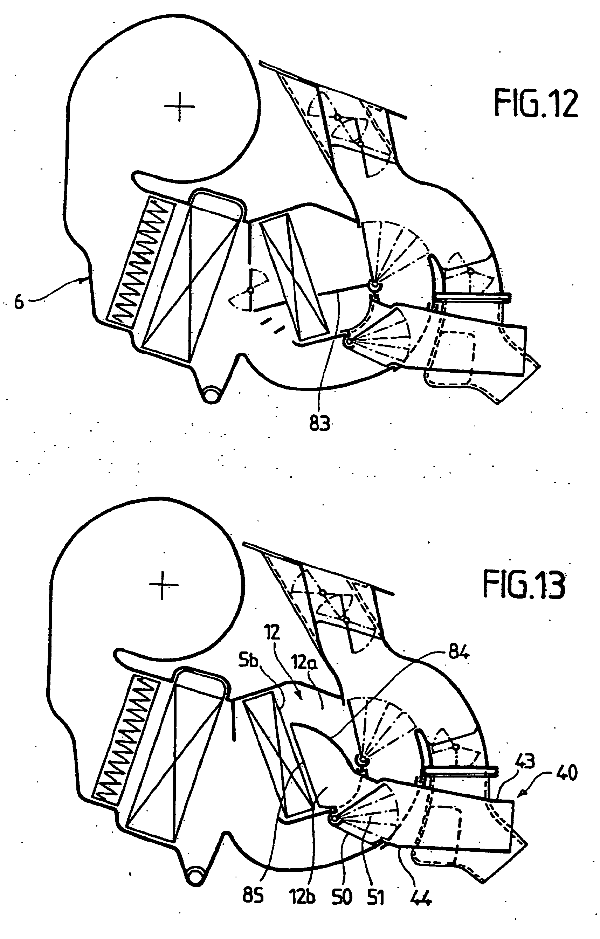

L'installation selon la figure 12 diffère de celle de la figure 1 en ce que le volet drapeau 20 séparant les sous-volumes 12a et 12b est remplacé par une cloison fixe 83 appartenant au corps principal 6 du boîtier.

Dans l'installation de la figure 13, ce même volet est également remplacé par une cloison fixe 84, qui appartient cette fois à la pièce rapportée 40 et est constituée par un prolongement de la paroi supérieure 43 de celle-ci. La paroi inférieure 44, au-delà de l'ouverture 50, et les parois latérales 45 et 46 (figure 5) sont également prolongées à l'intérieur du volume 12, de manière à définir pour le tube 40 une ouverture 85 d'entrée d'air chaud adjacente à la face de sortie 5b du radiateur. Le sous-volume 12b relié à la zone de mixage 51 se situe donc à l'intérieur du tube 40 et s'étend ainsi sur la largeur de celui-ci, et non plus sur toute la largeur du boîtier. Dans cette variante, la cloison 17 et le volet 18 sont également supprimés.

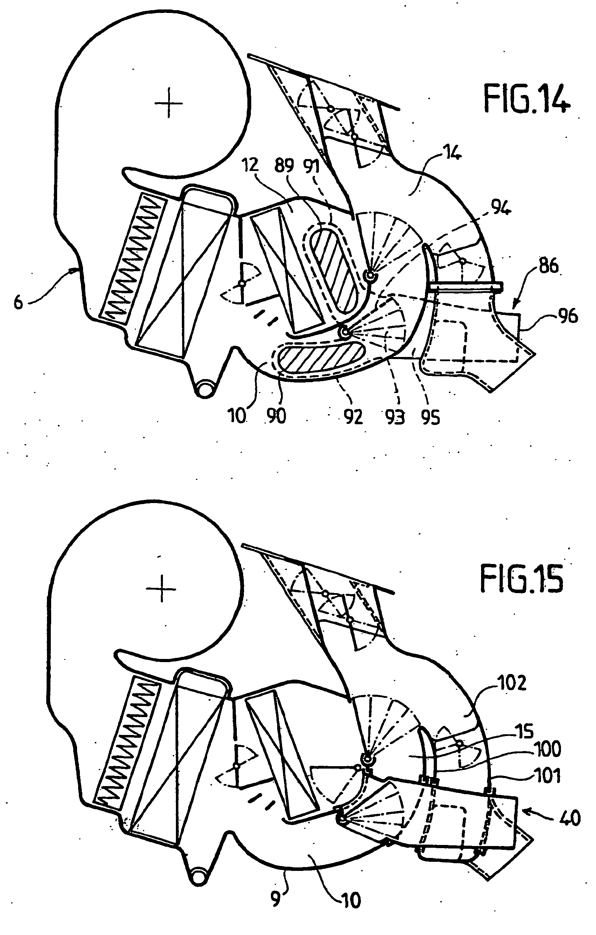

L'installation selon la figure 14 s'écarte de celle de la figure 1 par la suppression du volet 20, et par le remplacement de la pièce rapportée 40 par au moins une pièce rapportée 86 se fixant extérieurement sur l'une des faces latérales 88 (figure 5) du corps principal 6 du boîtier. Les ouvertures 42, 48 prévues pour le passage de la pièce 40 sont également supprimées, et d'autres ouvertures 89, 90 sont ménagées dans la paroi 88, adjacentes au volume 12 et à la conduite de contournement 10 respectivement. La pièce 86 est donc située en dehors de l'étendue latérale du corps 6 et définit une conduite d'entrée d'air chaud 91 adjacente à l'ouverture 89, une conduite d'air froid 92 adjacente à l'entrée 90, une zone de mixage 93 contenant un volet de mixage 94 pour le mélange dosé des flux d'air provenant de ces deux conduites, et une conduite de sortie 95 allant de la zone 93 à une ouverture de sortie 96. Dans cette variante, l'air froid circule jusqu'à la zone de mixage supérieure 14 de manière continue sur toute la largeur du corps 6. Avantageusement, il est prévu deux pièces rapportées 86 montées de part et d'autre du corps 6 et alimentant en air traité des zones différentes de l'habitacle. Les volets de mixage correspondants 94 peuvent être commandés indépendamment l'un de l'autre pour un réglage différencié de la température.

On retrouve sur la figure 15 une pièce rapportée 40 semblable à celle de la figure 1, qui traverse cette fois de manière étanche non seulement la paroi externe 9 délimitant les conduites 10 et 15, mais également les parois avant et arrière 100, 101 d'une conduite de sortie continue 102 remplaçant les conduites de sortie gauche et droite 31 de la figure 5.

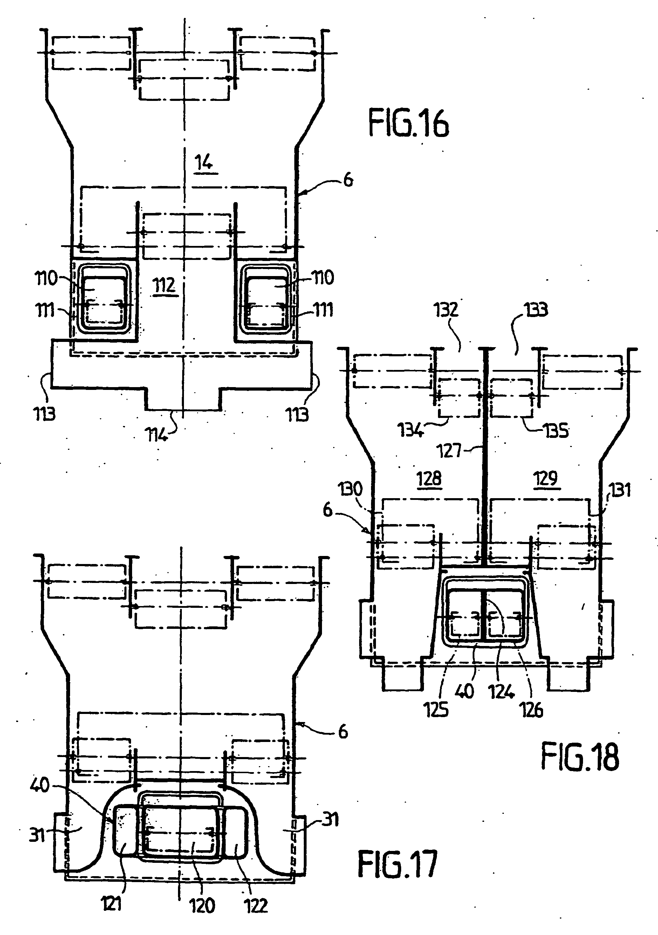

La figure 16 montre une configuration des conduites de sortie inférieure inversée par rapport à celle de la figure 5, des conduites gauche et droite 110, définies par des pièces rapportées respectives 111, analogues à la pièce 40 et logeant des volets de mixage respectifs, encadrant une conduite unique 112 définie par le corps principal 6 du boîtier et reliée à la zone de mixage supérieure 14. Dans l'exemple illustré, la conduite 112 est reliée à deux ouvertures de sortie latérales 113 et à une ouverture de sortie médiane 114.

Dans le mode de réalisation de la figure 17, la pièce rapportée 40 est modifiée pour définir, outre une conduite de sortie médiane 120, deux conduites de sortie 121, 122 disposées latéralement de part et d'autre de celle-ci, ces trois conduites étant reliées à la même zone de mixage 51 (figure 1). Les conduites de sortie latérales 31 du corps 6 sont rétrécies pour loger la pièce 40 ainsi élargie.

Dans la variante de la figure 18, la pièce rapportée 40 est semblable quant à sa configuration extérieure à celle des figures 1 et 5, mais le tube qu'elle définit est divisé intérieurement, sur toute sa longueur, par une cloison verticale 124. De part et d'autre de la cloison 124 sont formées deux zones de mixage contenant des volets de mixage respectifs 125, 126, et deux conduites de sortie destinées à desservir des zones gauche et droite de l'habitacle. Le corps de boîtier 6 est également divisé par une cloison verticale médiane 127, de part et d'autre de laquelle sont définies deux zones de mixage 128, 129, remplaçant la zone de mixage 14 et contenant des volets de mixage respectifs 130, 131, et deux conduites de sortie 132, 133 remplaçant la conduite 25 et contenant des volets de réglage respectifs 134, 135.

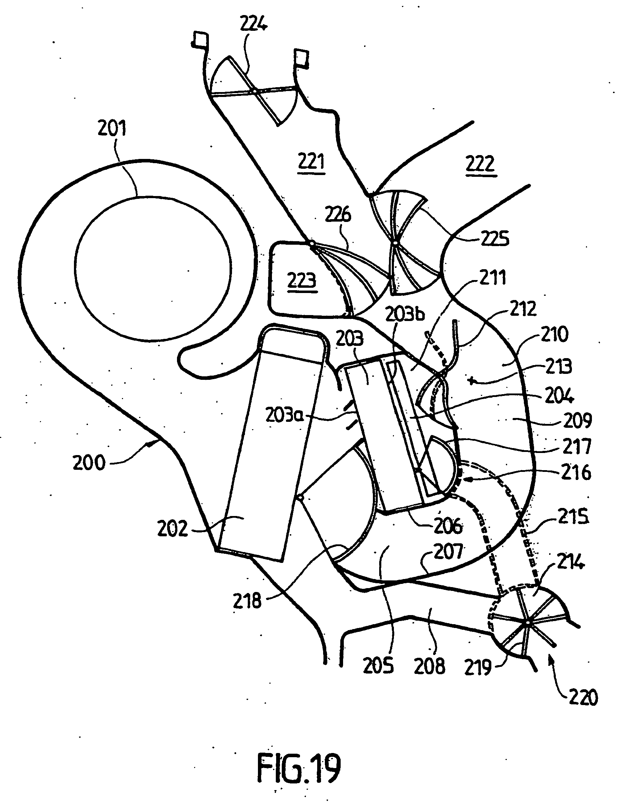

Le boîtier 200 de l'installation faisant l'objet de la figure 19 contient un pulseur 201, un évaporateur 202 et un radiateur de chauffage 203, dont la disposition relative est analogue à de celle illustrée sur la figure 1. Sur la face aval 203b du radiateur 203 est en outre placée une source de chaleur auxiliaire 204 telle qu'une résistance électrique à coefficient de température positif. Le boîtier 200 délimite, au-dessous du radiateur 203, deux conduites de contournement superposées, à savoir une conduite 205 délimitée par une paroi intermédiaire 206 adjacente au radiateur et par une paroi inférieure 207, et une conduite 208 disposée au-dessous de la conduite 205. Les parois 206 et 207 s'incurvent vers l'arrière et vers le haut pour délimiter une partie aval ascendante 209 de la conduite 205 qui aboutit à une première zone de mixage 210. La zone de mixage 210 est située immédiatement en arrière de la moitié supérieure du volume d'air chaud 211 adjacent à la face 203b, et peut être séparée de ce volume ou mise en communication avec celui-ci par un volet de mixage 212 de forme curviligne et décentré par rapport à son axe de rotation 213 situé à l'intérieur de la zone 210.

La conduite 208 aboutit à une seconde zone de mixage 214 qui est également reliée au volume 211 par l'intermédiaire d'une ou deux conduites d'air chaud 215 qui contournent latéralement la conduite 205-209, et qui communiquent avec le volume 211 par une ouverture 216 ménagée dans la paroi 206 et adjacente à la partie basse du volume 211. L'ouverture 216 peut être obturée ou libérée par un volet tambour 217 logé dans le volume 211. Un autre volet tambour 218 permet d'obturer, soit l'entrée de la conduite 205, soit l'accès à la moitié inférieure de la face amont 203a du radiateur 203. La zone de mixage 214 contient un volet de mixage 219 de type papillon et est reliée à une ouverture de sortie 220 qui joue le même rôle que l'ouverture de sortie 47 de l'installation de la figure 1. Par ailleurs, l'air mixé dans la zone 210 peut être envoyé vers diverses conduites de sortie supérieures 221, 222, 223 munies de volets de réglage 224, 225, 226.

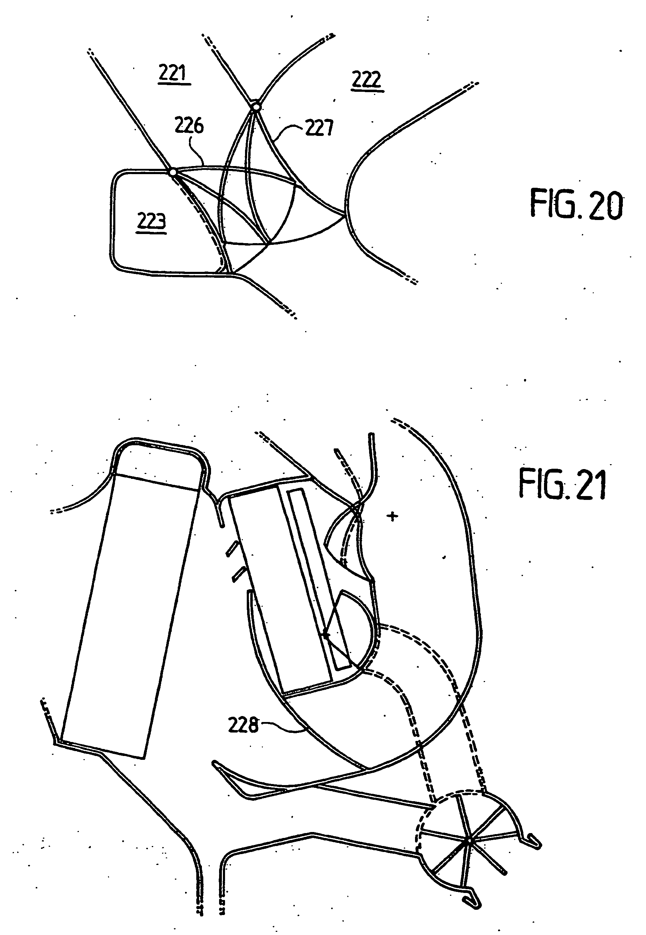

La figure 20 est une vue partielle d'une variante de l'installation de la figure 19, dans laquelle le volet papillon 225 commandant l'entrée de la conduite 222 est remplacé par un volet drapeau 227 semblable au volet 226 qui commande l'entrée de la conduite 221.

Dans la variante de la figure 21, le volet tambour 218 de la figure 19, dont la concavité est tournée vers l'avant, est remplacé par un volet tambour 228 ayant la même fonction et dont la concavité est tournée vers l'arrière.

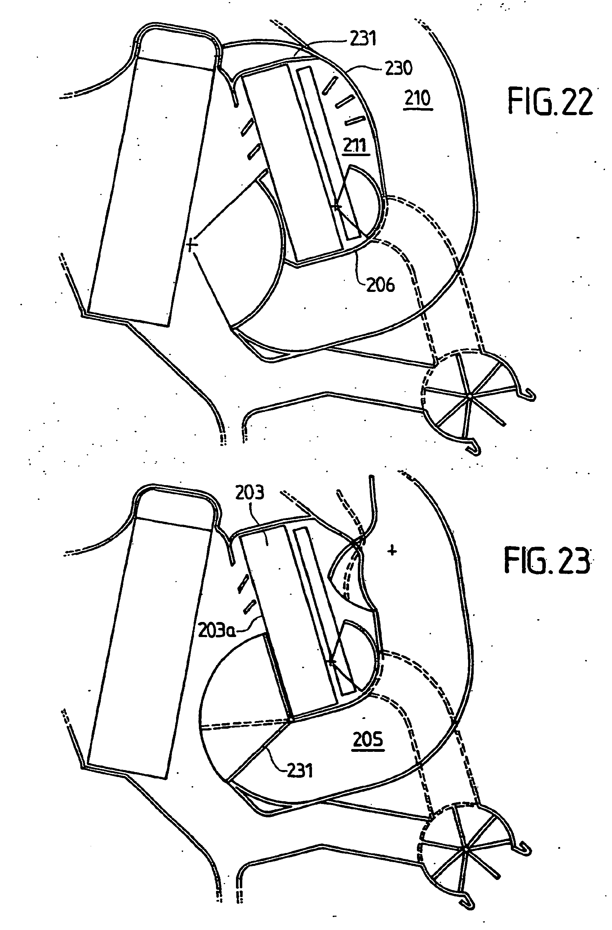

Dans la variante de la figure 22, c'est le volet de mixage 212 qui est remplacé par un volet tambour 230 qui peut, soit obturer le passage entre le volume d'air chaud 211 et la zone de mixage 210, en se plaçant dans le prolongement, vers le haut et vers l'avant, de la paroi 206, soit libérer ce passage en s'effaçant au-dessus de la paroi supérieure 231 du volume 211.

Sur la figure 23, le volet tambour 218 est remplacé par un volet drapeau 232 qui peut se déplacer entre une position extrême où il obture l'entrée de la conduite de contournement 205 et une position extrême où il recouvre la moitié inférieure de la face d'entrée 203a du radiateur 203.

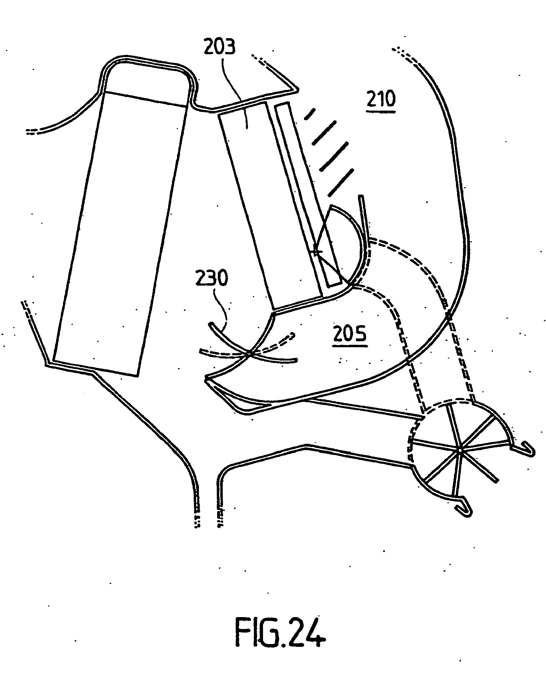

Dans la variante de la figure 24, le volet tambour 218 est remplacé par un volet papillon curviligne 230 qui peut obturer ou libérer l'entrée de la conduite de contournement 205. Le volet de mixage 212 est supprimé, de sorte que la zone de mixage 210 est toujours alimentée en air à travers le radiateur 203. Il est nécessaire de prévoir un robinet pour interrompre l'alimentation du radiateur 203 en fluide caloporteur lorsque la zone 210 ne doit pas recevoir d'air chaud.

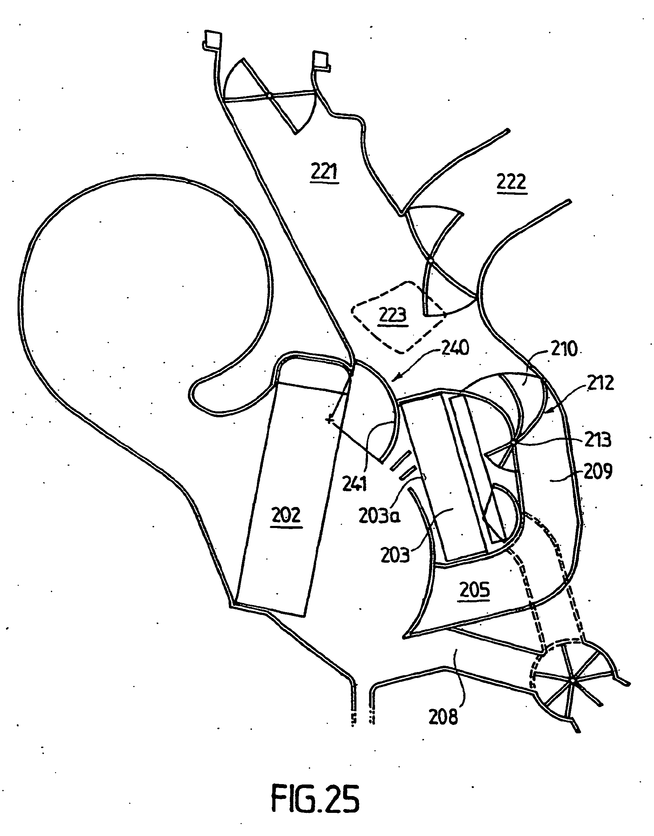

L'installation illustrée sur la figure 25 reprend pour l'essentiel les éléments de celle de la figure 19, les différences étant indiquées ci-après. La disposition de la conduite 223 par rapport aux conduites 221 et 222 est modifiée, et le volet associé 226 est supprimé. La forme du volet de mixage 212 est modifiée, et il contient son axe de rotation 213. Dans la position extrême où il permet un débit maximal d'air chaud vers la zone de mixage 210, il obture l'arrivée d'air froid vers celle-ci depuis la conduite 209. Enfin, une ouverture 240 adjacente au bord supérieur de la face avant 203a du radiateur 203, commandée par un volet tambour 241, permet à l'air provenant de l'évaporateur 202 d'accéder aux conduites de sorties supérieures 221, 222, 223 sans passer par la zone de mixage 210.

Ici encore, la disposition des deux conduites de contournement 205 et 208 au-dessous du radiateur 203 permet de raccourcir le trajet de l'air chaud radiateur 203 à la sortie de la conduite de dégivrage 221, par rapport à une installation dans laquelle l'une des conduites de contournement passerait au-dessus du radiateur.

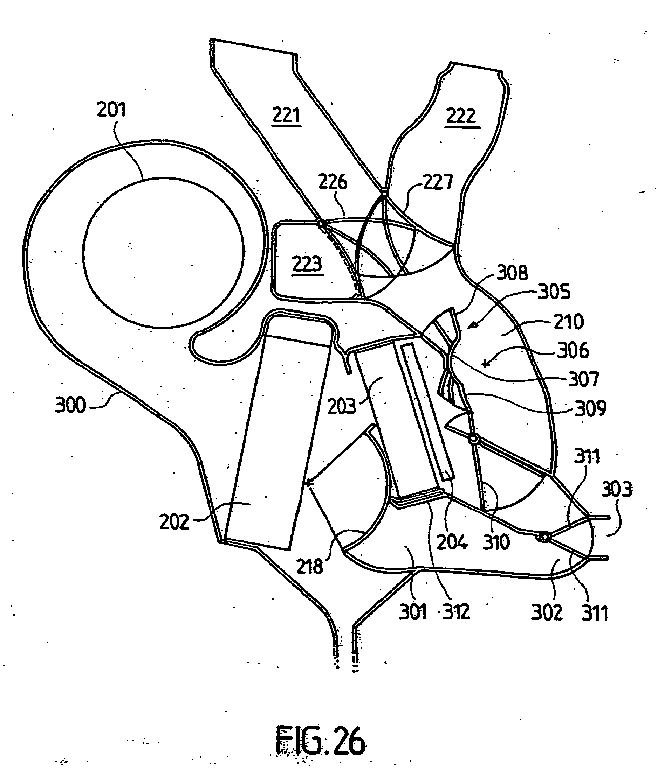

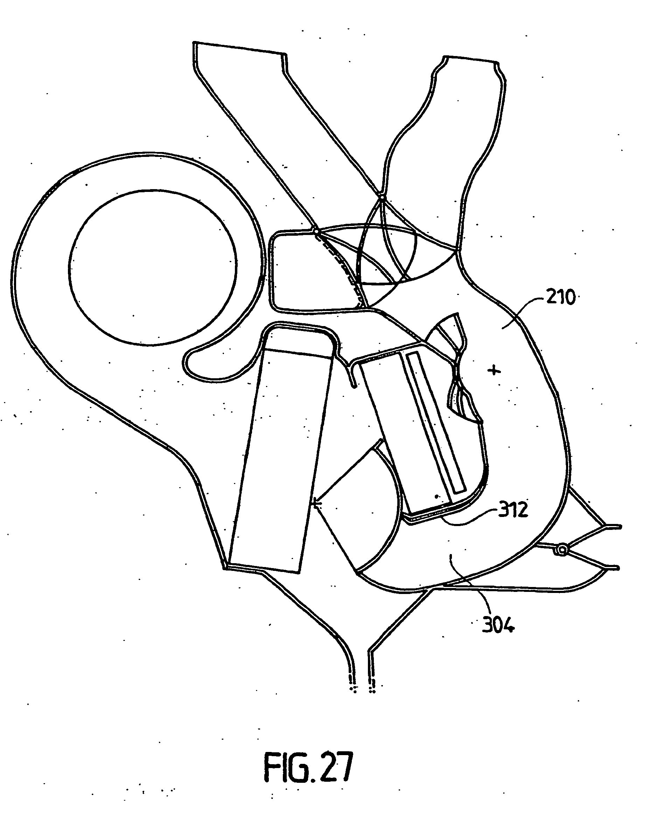

L'installation illustrée sur les figures 26 et 27 comprend un pulseur 201, un évaporateur 202, un radiateur de chauffage 203, une source de chaleur auxiliaire 204, une zone de mixage 210, un volet tambour 218, des conduites de sortie 221, 222, 223 et des volets 226, 227 associés à celles-ci, semblables aux éléments correspondants des figures 19 et 20 et logés sensiblement selon la même disposition dans un boîtier 300.

Le boîtier 300 délimite en outre au moins deux conduites de contournement passant au-dessous du radiateur 203, mutuellement juxtaposées dans la direction latérale, à savoir une ou plusieurs conduites 301 aboutissant chacune à une zone de mixage inférieure 302, elle-même reliée à la partie arrière de l'habitacle par une sortie 303, et une ou plusieurs conduites 304 reliées à la zone de mixage supérieure 210. Des cloisons verticales délimitent latéralement la ou les conduites 301, la ou les zones de mixage 302 et la ou les conduites 304. Comme décrit à propos des figures 5 et 16, on peut prévoir notamment une seule zone de mixage inférieure médiane, encadrée par deux conduites 304 latérales, ou deux zones de mixage 302 latérales, encadrant une conduite 304 médiane.

Le volet 212 de la figure 19 est remplacé par un volet 305 de forme particulière, comprenant, en section transversale par un plan perpendiculaire à son axe de pivotement 306, une partie centrale 307 en arc de cercle centré sur l'axe 306, analogue à un volet tambour, se raccordant à des parties marginales 308, 309 qui vont en s'éloignant de l'axe à partir de la région 307. L'axe 306 se situe à l'intérieur de la zone 210. Cette configuration permet un encombrement réduit du volet, et une étanchéité améliorée en position de fermeture.

L'entrée d'air froid dans la ou les conduites 304 et l'entrée d'air chaud dans la zone de mixage 210 peuvent être fermées, et ouvertes de manière progressive, par les volets 218 et 305 respectivement, de manière à régler la température de l'air dans la zone 210. Deux autres volets sont associés à la ou à chaque zone de mixage inférieure 302, à savoir un volet papillon 310 pouvant fermer, ou ouvrir progressivement, l'accès de l'air chaud à cette zone, et un volet drapeau 311 pouvant se déplacer entre deux positions extrêmes dans lesquelles la sortie 303 est reliée exclusivement à l'arrivée d'air froid et exclusivement à l'arrivée d'air chaud respectivement. Le volet 218 est évidé en regard de la ou des conduites 301 de manière à permettre l'entrée d'air froid dans celle-ci dans toutes ses positions.

Une installation simplifiée, sans alimentation séparée de la partie arrière de l'habitacle, peut être réalisée sans aucune modification du boîtier illustré sur les figures 26 et 27. Il suffit pour cela d'immobiliser les volets 310 et 311 dans les positions où ils obturent respectivement l'arrivée d'air chaud et l'arrivée d'air froid à la zone de mixage 302, de telle sorte que celle-ci, et par conséquent la sortie 303, ne reçoivent pas d'air.

Dans le boîtier illustré, la paroi 312 séparant les conduites de contournement 301 et 304 du radiateur 203 est double de manière à améliorer l'isolation thermique entre ce dernier et l'air froid circulant dans les conduites de contournement. En variante, cet effet pourrait être obtenu par un choix approprié de l'épaisseur ou du matériau de la paroi.

## Revendications

1. Installation de chauffage/ventilation ou de climatisation de l'habitacle d'un véhicule, comprenant un boîtier (6) contenant des moyens de traitement d'un flux d'air à envoyer dans l'habitacle, lesdits moyens comportant au moins une première source (5) de chaleur et des éléments de commutation (18, 19, 20, 26, 29, 32, 52) commandés de manière à définir des trajets variables pour ledit flux d'air entre au moins une entrée et diverses sorties associées à des régions respectives de l'habitacle, le boîtier définissant une première zone de mixage (14) reliée à au moins l'une (27, 30) desdites sorties et une seconde zone de mixage (51) reliée à au moins une autre (47) desdites sorties, chacune desdites zones de mixage pouvant recevoir en des proportions réglables un premier flux d'air ayant traversé ladite première source et un second flux d'air ayant contourné celle-ci, lesdits seconds flux d'air contournant tous deux la première source par le dessous dans une conduite de contournement (10), ladite première source étant un radiateur (5), **caractérisée en ce que** le boîtier de l'installation comprend une pièce rapportée qui a la forme générale d'un tube à section rectangulaire variable, l'intérieur du tube formant une seconde zone de mixage (51) pouvant recevoir de l'air réchauffé par le radiateur (5) et de l'air non réchauffé provenant de la conduite (10).

2. Installation selon la revendication 1, dans laquelle la première zone de mixage est reliée à au moins une sortie associée à une région avant de l'habitacle et la seconde zone de mixage est reliée à au moins une sortie associée à une région arrière de l'habitacle.

3. Installation selon l'une des revendications 1 et 2, dans laquelle ladite première source est une source de chaleur et les moyens de traitement comportent en outre une source de froid (4) que lesdits premiers et seconds flux d'air traversent avant de traverser ou de contourner la source de chaleur.

4. Installation selon l'une des revendications précédentes, dans laquelle le boîtier définit une conduite de contournement unique (10) au-dessous de la première source et des moyens pour subdiviser, dans la direction latérale du boîtier, un second flux d'air ayant circule dans ladite conduite de contournement en au moins une première fraction dirigée vers la première zone de mixage et une seconde fraction dirigée vers la seconde zone de mixage.

5. Installation selon la revendication 4, dans laquelle lesdits moyens pour subdiviser le second flux d'air comprennent une première cloison (45, 46) sensiblement verticale juxtaposée latéralement à la seconde zone de mixage (51).

6. Installation selon l'une des revendications 1 à 3, dans laquelle le boîtier définit au-dessous de la première source, une première conduite de contournement (10) reliée à la première zone de mixage et une seconde conduite de contournement (72) aboutissant à la seconde zone de mixage, mutuellement juxtaposés dans la direction latérale du boîtier, la seconde conduite de contournement et la seconde zone de mixage étant séparées de la première conduite de contournement par une première cloison sensiblement verticale.

7. Installation selon la revendication 6, dans laquelle la seconde conduite de contournement (72) comporte un volet (75) pouvant se déplacer entre une position extrême obturant l'entrée de ladite seconde conduite et une autre position extrême ou il interdit l'accès de l'air à une partie de la première source (5).

8. Installation selon la revendication 7, dans laquelle le volet (75) s'étend de manière continu dans le boîtier (6) pour se déplacer entre, une position extrême d'obturation simultanée de la première conduite de contournement (10) et de la seconde conduite de contournement (72) et une autre position extrême ou il interdit l'accès de l'air a une partie de la première source (5).

9. Installation selon la revendication 7, dans laquelle le volet (75) est constitué par au moins deux volets (75a, 75b), lesdits volets pouvant se déplacer indépendamment entre une position extrême pendant laquelle il obture simultanément une partie de la première conduite de contournement (10) et une partie de la seconde conduite de contournement (72) et une autre position extrême où il interdit l'accès de l'air à une partie de la première source (5).

10. Installation selon la revendication 7, dans laquelle le volet (75) est constitué par trois volets (75a, 75b, 75c), lesdits volets (75a, 75b) pouvant se déplacer indépendamment entre une position extrême pendant laquelle il obture une partie de la première conduite de contournement (10) et une autre position extrême ou il interdit l'accès de l'air à une partie de la première source (5), ledit volet (75c) pouvant se déplacer indépendamment entre une position extrême pendant laquelle il obture la seconde conduite de contournement (72) et une autre position extrême où il interdit l'accès de l'air à une partie de la première source (5).

11. Installation selon l'une des revendications 5 et 6, dans laquelle ladite première cloison se raccorde à une paroi intermédiaire (8) et traverse une paroi externe (9) s'étendant toutes deux dans la direction latérale et délimitant la ou les conduites de contournement, la paroi intermédiaire séparant ces dernières de la première source.

12. Installation selon la revendication 11, dans laquelle ladite paroi intermédiaire est propre à assurer une isolation thermique entre la première source et l'intérieur de la ou des conduites de contournement.

13. Installation selon l'une des revendications 5 à 11, dans laquelle la première zone dé mixage (14) présente une étendue dans la direction latérale coïncidant sensiblement avec celle de la conduite de contournement ou de l'ensemble des conduites de contournement et est séparée de la seconde zone de mixage (51) par une seconde cloison (43) s'étendant dans cette même direction et se raccordant à la première cloison (45, 46).

14. Installation selon la revendication 13, dans laquelle le boîtier comprend un corps principal (6) logeant la première source et définissant la première ou unique conduite de contournement, et la pièce rapportée (40) formant les première et seconde cloisons et définissant une conduite de sortie s'étendant à l'extérieur du corps principal jusqu'à ladite autre sortie (47).

15. Installation selon l'une des revendications 4 à 14, dans laquelle les première et seconde zones de mixage communiquent avec un volume unitaire (12) situé immédiatement en aval de la première source (5).

16. Installation selon l'une des revendications 4 à 14, dans laquelle les première et seconde zones de mixage communiquent avec des volumes respectifs (12a, 12b) situes immédiatement en aval de la première source de part et d'autre d'une cloison séparatrice (20) s'étendant dans la direction latérale.

17. Installation selon la revendication 16, dans laquelle ladite cloison séparatrice (84) est formée par ladite pièce rapportée (40).

18. Installation selon l'une des revendications 16 et 17, dans laquelle ladite cloison séparatrice (20) est propre à pivoter autour d'un axe sensiblement horizontal pour faire varier la taille relative desdits volumes respectifs.

19. Installation selon l'une des revendications 4 à 18, dans laquelle le boîtier est sensiblement symétrique par rapport a un plan vertical et définit au moins une seconde zone de mixage (51) située dans une position médiane et, de part et d'autre de celle-ci, au moins une conduite de sortie gauche (31) et au moins une conduite de sortie droite (31) raccordées en aval de la première zone de mixage (14).

20. Installation selon l'une des revendications 4 à 18, dans laquelle le boîtier est sensiblement symétrique par rapport a un plan vertical et définit au moins une conduite de sortie (112) raccordée en aval de la première zone de mixage (14) et située dans une position médiane et, de part et d'autre de celle-ci, une seconde zone de mixage gauche (110) et une seconde zone de mixage droite (110).

21. Installation selon l'une des revendications 1 à 3, dans laquelle le boîtier définit au-dessous de la première source une conduite de contournement unique (10) reliée à la première zone de mixage (14), la conduite de contournement et la première zone de mixage présentant une étendue dans la direction latérale qui coïncide sensiblement avec celle de la première source, ainsi qu'au moins une première conduite de dérivation (91) et une seconde conduite de dérivation (92) partant respectivement d'un volume (12) situé immédiatement en aval de la première source (5) et de la conduite de contournement (10) pour aboutir a la seconde zone de mixage (93), lesdites conduites de dérivation et la seconde zone de mixage étant décales latéralement par rapport à la première source.

22. Installation selon l'une des revendications 1 à 3, dans laquelle le boîtier (200) définit au-dessous de la première source une première conduite de contournement (205) reliée à la première zone de mixage (210) et une seconde conduite de contournement (208) aboutissant à la seconde zone de mixage (214) et située au-dessous de la première conduite de contournement.

23. Installation selon la revendication 22, dans laquelle lesdites conduites de contournement et lesdites zones de mixage présentent une étendue dans la direction latérale qui coïncide sensiblement avec celle de la première source, le boîtier (200) définissant en outre au-dessous de la première source au moins une conduite de dérivation (215) partant d'un volume (211) situé immédiatement en aval de la première source pour aboutir à la seconde zone de mixage, ladite conduite de dérivation étant décalée latéralement par rapport à la première source

24. Installation selon l'une des revendications précédentes, dans laquelle il est prévu pour régler le débit du premier flux d'air à l'entrée de la première zone de mixage (210) un volet (305) propre à pivoter autour d'un axe (306) situé à l'intérieur de celle-ci, ce volet ayant une forme cylindrique de génératrice parallèle audit axe et comportant en section transversale une région médiane (307) en forme d'arc de cercle centrée sur l'axe, se raccordant à deux régions marginales qui s'éloignent de l'axe, lesdites régions marginales (308, 309) venant en appui sur une paroi séparatrice pour définir une position de fermeture étanche du volet.

## Patentansprüche

1. Heiz-/Lüftungs- oder Klimaanlage für den Innenraum eines Fahrzeugs, umfassend ein Gehäuse (6), das Mittel zur Behandlung eines in den Innenraum zu senden Luftstroms enthält, wobei die Mittel mindestens eine erste Wärmequelle (5) und Umschaltelemente (18, 19, 20, 26, 29, 32, 52) aufweisen, die so betätigt werden, dass sie variable Bahnen für den Luftstrom zwischen mindestens einem Eingang und verschiedenen, den jeweiligen Bereichen des Innenraums zugeordneten Ausgängen definieren, wobei das Gehäuse eine erste Mischzone (14), die mindestens einem (27, 30) der Ausgänge zugeordnet ist, und eine zweite Mischzone (51), die mindestens einem anderen (47) der Ausgänge zugeordnet ist, definiert, wobei jede der Mischzonen in einstellbaren Anteilen einen ersten Luftstrom, der die erste Quelle durchströmt hat, und einen zweiten Luftstrom, der diese umgangen hat, empfangen kann, wobei die zweiten Luftströme beide die erste Quelle in einer Umgehungsleitung (10) von unten umgehen, wobei die erste Quelle ein Heizkörper (5) ist, **dadurch gekennzeichnet, dass** das Gehäuse der Anlage ein angefügtes Teil umfasst, das die allgemeine Form eines Rohrs mit einem variablen rechteckigen Querschnitt aufweist, wobei das Innere des Rohrs eine zweite Mischzone (51) bildet, die die durch den Heizkörper (5) erwärmte Luft und von der Leitung (10) stammende nicht erwärmte Luft empfangen kann.

2. Anlage nach Anspruch 1, bei der die erste Mischzone mit mindestens einem Ausgang verbunden ist, der einem vorderen Bereich des Innenraums zugeordnet ist, und die zweite Mischzone mit mindestens einem Ausgang verbunden ist, der einem hinteren Bereich des Innenraums zugeordnet ist.

3. Anlage nach einem der Ansprüche 1 und 2, bei der die erste Quelle eine Wärmequelle ist und die Behandlungsmittel des Weiteren eine Kältequelle (4) aufweisen, die von den ersten und zweiten Luftströmen vor Durchqueren oder Umgehen der Wärmequelle durchquert wird.

4. Anlage nach einem der vorhergehenden Ansprüche, bei der das Gehäuse eine einzige Umgehungsleitung (10) unter der ersten Quelle und Mittel zur Unterteilung eines zweiten Luftstroms, der in der Umgehungsleitung zirkuliert hat, in Querrichtung des Gehäuses, in mindestens eine erste Fraktion, die zur ersten Mischzone gerichtet ist, und eine zweite Fraktion, die zur zweiten Mischzone gerichtet ist, aufweist.

5. Anlage nach Anspruch 4, bei der die Mittel zur Unterteilung des zweiten Luftstroms eine im Wesentlichen vertikale, lateral neben der zweiten Mischzone (51) angeordnete erste Trennwand (45, 46) umfassen.

6. Anlage nach einem der Ansprüche 1 bis 3, bei der das Gehäuse unter der ersten Quelle eine erste Umgehungsleitung (10), die mit der ersten Mischzone verbunden ist, und eine zweite Umgehungsleitung (72), die in der zweiten Mischzone endet, definiert, wobei diese nebeneinander in Querrichtung des Gehäuses angeordnet sind und wobei die zweite Umgehungsleitung und die zweite Mischzone durch eine im Wesentlichen vertikale erste Trennwand von der ersten Umgehungsleitung getrennt sind.

7. Anlage nach Anspruch 6, bei der die zweite Umgehungsleitung (72) eine Klappe (75) aufweist, die sich zwischen einer den Eingang der zweiten Leitung verschließenden Endposition und einer anderen Endposition, in der sie den Zugang der Luft zu einem Teil der ersten Quelle (5) verhindert, bewegen kann.

8. Anlage nach Anspruch 7, bei der sich die Klappe (75) durchgehend in dem Gehäuse (6) erstreckt, um sich zwischen einer Endposition, in der sie gleichzeitig die erste Umgehungsleitung (10) und die zweite Umgehungsleitung (72) verschließt, und einer anderen Endposition, in der sie den Zugang der Luft zu einem Teil der ersten Quelle (5) verhindert, zu bewegen.

9. Anlage nach Anspruch 7, bei der die Klappe (75) durch mindestens zwei Klappen (75a, 75b) gebildet wird, wobei sich die Klappen unabhängig zwischen einer Endposition, in der sie gleichzeitig einen Teil der ersten Umgehungsleitung (10) und einen Teil der zweiten Umgehungsleitung (72) verschließt, und einer anderen Endposition, in der sie den Zugang der Luft zu einem Teil der ersten Quelle (5) verhindert, bewegen können.

10. Anlage nach Anspruch 7, in der die Klappe (75) durch drei Klappen (75a, 75b, 75c) gebildet wird, wobei sich die Klappen (75a, 75b) unabhängig zwischen einer Endposition, in der sie einen Teil der ersten Umgehungsleitung (10) verschließt, und einer anderen Endposition, in der sie den Zugang der Luft zu einem Teil der ersten Quelle (5) verhindert, bewegen können, wobei sich die Klappe (75c) unabhängig zwischen einer Endposition, in der sie die zweite Umgehungsleitung (72) verschließt, und einer anderen Endposition, in der sie den Zugang der Luft zu einem Teil der ersten Quelle (5) verhindert, bewegen kann.

11. Anlage nach einem der Ansprüche 5 und 6, bei der die erste Trennwand mit einer Zwischenwand (8) verbunden ist und eine Außenwand (9) durchquert, die sich beide in Querrichtung erstrecken und die Umgehungsleitung(en) begrenzen, wobei die Zwischenwand diese letzteren von der ersten Quelle trennt.

12. Anlage nach Anspruch 11, bei der die Zwischenwand eine Wärmeisolierung zwischen der ersten Quelle und dem Inneren der Umgehungsleitung(en) gewährleisten kann.

13. Anlage nach einem der Ansprüche 5 bis 11, bei der die erste Mischzone (14) eine Erstreckung in Querrichtung aufweist, die mit der der Umgehungsleitung oder Anordnung von Umgehungsleitungen im Wesentlichen zusammenfällt, und durch eine zweite Trennwand (43), die sich in der gleichen Richtung erstreckt und mit der ersten Trennwand (45, 46) verbunden ist, von der zweiten Mischzone (51) getrennt ist.

14. Anlage nach Anspruch 13, bei der das Gehäuse einen Hauptkörper (6), der die erste Quelle aufnimmt und die erste oder einzige Umgehungsleitung definiert, und das angefügte Teil (40) aufweist, das die erste und die zweite Trennwand bildet und eine Ausgangsleitung definiert, die sich außerhalb des Hauptkörpers bis zum anderen Ausgang (47) erstreckt.

15. Anlage nach einem der Ansprüche 4 bis 14, bei der die erste und die zweite Mischzone mit einem einzigen Volumen (12) verbunden sind, das sich unmittelbar stromabwärts der ersten Quelle (5) befindet.

16. Anlage nach einem der Ansprüche 4 bis 14, bei der die erste und die zweite Mischzone mit jeweiligen Volumen (12a, 12b) verbunden sind, die sich unmittelbar stromabwärts der ersten Quelle auf beiden Seiten einer Trennwand (20) befinden, die sich in Querrichtung erstreckt.

17. Anlage nach Anspruch 16, bei der die Trennwand (84) durch das angefügte Teil (40) gebildet wird.

18. Anlage nach einem der Ansprüche 16 und 17, bei der die Trennwand (20) um eine im Wesentlichen horizontale Achse schwenken kann, um die relative Größe der jeweiligen Volumen zu ändern.

19. Anlage nach einem der Ansprüche 4 bis 18, bei der das Gehäuse bezüglich einer Vertikalebene im Wesentlichen symmetrisch ist und mindestens eine zweite Mischzone (51), die sich in einer mittleren Position befindet, und auf beiden Seiten davon mindestens eine linke Ausgangsleitung (31) und mindestens eine rechte Ausgangsleitung (31), die stromabwärts der ersten Mischzone (14) verbunden sind, definiert.

20. Anlage nach einem der Ansprüche 4 bis 18, bei der das Gehäuse bezüglich einer Vertikalebene im Wesentlichen symmetrisch ist und mindestens eine Ausgangsleitung (112), die stromabwärts mit der ersten Mischzone (14) verbunden ist und sich in einer mittleren Position befindet, und auf beiden Seiten davon eine zweite linke Mischzone (110) und eine zweite rechte Mischzone (110) definiert.

21. Anlage nach einem der Ansprüche 1 bis 3, bei der das Gehäuse unter der ersten Quelle eine einzige Umgehungsleitung (10), die mit der ersten Mischzone (14) verbunden ist, wobei die Umgehungsleitung und die erste Mischzone eine Erstreckung in Querrichtung aufweisen, die mit der der ersten Quelle im Wesentlichen zusammenfällt, sowie mindestens eine erste Abzweigungsleitung (91) und eine zweite Abzweigungsleitung (92) definiert, die jeweils von einem sich unmittelbar stromabwärts der ersten Quelle (5) und der Umgehungsleitung (10) befindenden Volumen (12) ausgehen, um an der zweiten Mischzone (93) zu enden, wobei die Abzweigungsleitungen und die zweite Mischzone bezüglich der ersten Quelle seitlich versetzt sind.

22. Anlage nach einem der Ansprüche 1 bis 3, bei der das Gehäuse (200) unter der ersten Quelle eine erste Umgehungsleitung (205), die mit der ersten Mischzone (210) verbunden ist, und eine zweite Umgehungsleitung (208), die an der zweiten Mischzone (214) endet und sich unter der ersten Umgehungsleitung befindet, definiert.

23. Anlage nach Anspruch 22, bei der die Umgehungsleitungen und die Mischzonen eine Erstreckung in Querrichtung aufweisen, die mit der der ersten Quelle im Wesentlichen zusammenfällt, wobei das Gehäuse (200) des Weiteren unter der ersten Quelle mindestens eine Abzweigungsleitung (215) definiert, die von einem Volumen (211) ausgeht, das sich unmittelbar stromabwärts der ersten Quelle befindet, um an der zweiten Mischzone zu enden, wobei die Abzweigungsleitung bezüglich der ersten Quelle seitlich versetzt ist.

24. Anlage nach einem der vorhergehenden Ansprüche, bei der zur Einstellung des Durchflusses des ersten Luftstroms am Eingang der ersten Mischzone (210) eine Klappe (305) vorgesehen ist, die um eine sich in der Zone befindende Achse (306) schwenken kann, wobei diese Klappe eine zylindrische Form mit einer parallel zur Achse verlaufenden Erzeugenden aufweist und im Querschnitt einen auf der Achse zentrierten kreisbogenförmigen mittleren Bereich (307) enthält, der mit zwei sich von der Achse entfernenden Randbereichen verbunden ist, wobei die Randbereiche (308, 309) an einer Trennwand zur Anlage kommen, um eine dichte Schließposition der Klappe zu definieren.

## Claims

1. Installation for heating/ventilating or air-conditioning the passenger compartment of a vehicle, comprising a housing (6) containing means of treating an air flow that is to be sent into the passenger compartment, the said means comprising at least a first source (5) of heat and switching elements (18, 19, 20, 26, 29, 32, 52) controlled in such a way as to define variable paths for the said air flow between at least one inlet and various outlets associated with respective regions of the passenger compartment, the housing defining a first mixing zone (14) connected to at least one (27, 30) of the said outlets and a second mixing zone (51) connected to at least one other (47) of the said outlets, each of the said mixing zones being able to receive, in adjustable proportions, a first air flow that has passed through the said first source and a second air flow that has bypassed this source, the said second air flows both bypassing the first source from below in a bypass duct (10), the said first source being a radiator (5), **characterized in that** the housing of the installation comprises an attached part which has the overall shape of a tube of variable rectangular cross section, the inside of the tube forming a second mixing zone (51) capable of receiving air that has been heated up by the radiator (5) and unheated air from the duct (10).

2. Installation according to Claim 1, in which the first mixing zone is connected to at least one outlet associated with a front region of the passenger compartment and the second mixing zone is connected to at least one outlet associated with a rear region of the passenger compartment.

3. Installation according to either of Claims 1 and 2, in which the said first source is a source of heat and the treatment means further comprise a source of cold (4) through which the said first and second air flows pass before either passing through or bypassing the source of heat.

4. Installation according to one of the preceding claims, in which the housing defines a single bypass duct (10) under the first source and means for subdividing, in the lateral direction of the housing, a second air flow that has flowed through the said bypass duct into at least one first fraction directed towards the first mixing zone and one second fraction directed towards the second mixing zone.

5. Installation according to Claim 4, in which the said means for subdividing the second air flow comprise a substantially vertical first partition (45, 46) laterally juxtaposed with the second mixing zone (51).

6. Installation according to one of Claims 1 to 3, in which the housing defines, underneath the first source, a first bypass duct (10) connected to the first mixing zone and a second bypass duct (72) leading to the second mixing zone, these ducts being mutually juxtaposed in the lateral direction of the housing, the second bypass duct and the second mixing zone being separated from the first bypass duct by a substantially vertical first partition.

7. Installation according to Claim 6, in which the second bypass duct (72) comprises a shutter (75) that can be moved between an extreme position that blocks off the inlet to the said second duct and another extreme position in which it prevents air from accessing part of the first source (5).

8. Installation according to Claim 7, in which the shutter (75) runs continuously in the housing (6) to move between an extreme position in which it simultaneously blocks off the first bypass duct (10) and the second bypass duct (72), and another extreme position in which it prevents air from accessing part of the first source (5).

9. Installation according to Claim 7, in which the shutter (75) is made up of at least two shutters (75a, 75b), it being possible for the said shutters to move independently between an extreme position in which it simultaneously blocks off part of the first bypass duct (10) and part of the second bypass duct (72), and another extreme position in which it prevents air from accessing part of the first source (5).

10. Installation according to Claim 7, in which the shutter (75) consists of three shutters (75a, 75b, 75c), it being possible for the said shutters (75a, 75b) to move independently between an extreme position in which it blocks off part of the first bypass duct (10) and another extreme position in which it prevents air from accessing part of the first source (5), it being possible for the said shutter (75c) to move independently between an extreme position in which it blocks off the second bypass duct (72) and another extreme position in which it prevents air from accessing part of the first source (5).

11. Installation according to either of Claims 5 and 6, in which the said first partition is connected to an intermediate wall (8) and passes through an external wall (9), both these walls running in the lateral direction and delineating the bypass duct or ducts, the intermediate wall separating these from the first source.

12. Installation according to Claim 11, in which the said intermediate wall is able to provide thermal insulation between the first source and the inside of the bypass duct or ducts.

13. Installation according to one of Claims 5 to 11, in which the first mixing zone (14) has a span in the lateral direction that more or less coincides with that of the bypass duct or of the collection of bypass ducts and is separated from the second mixing zone (51) by a second partition (43) running in this same direction and connected to the first partition (45, 46).

14. Installation according to Claim 13, in which the housing comprises a main body (6) housing the first source and defining the first or only bypass duct, and the attached part (40) forming the first and second partitions and defining an outlet duct extending along the outside of the main body as far as the said other outlet (47).

15. Installation according to one of Claims 4 to 14, in which the first and second mixing zones communicate with a single volume (12) situated immediately downstream of the first source (5).

16. Installation according to one of Claims 4 to 14, in which the first and second mixing zones communicate with respective volumes (12a, 12b) situated immediately downstream of the first source on each side of a dividing partition (20) that runs in the lateral direction.

17. Installation according to Claim 16, in which the said dividing partition (84) is formed by the said attached part (40).

18. Installation according to either of Claims 16 and 17, in which the said dividing partition (20) is able to pivot about a substantially horizontal axis in order to vary the relative size of the said respective volumes.

19. installation according to one of Claims 4 to 18, in which the housing is substantially symmetric with respect to a vertical plane and defines at least a second mixing zone (51) situated in a central position and, on each side thereof, at least one left outlet duct (31) and at least one right outlet duct (31) which are connected downstream of the first mixing zone (14).

20. Installation according to one of Claims 4 to 18, in which the housing is substantially symmetric with respect to a vertical plane and defines at least one outlet duct (112) connected downstream of the first mixing zone (14) and situated in a central position and, on each side thereof, a left second mixing zone (110) and a right second mixing zone (110).

21. Installation according to one of Claims 1 to 3, in which the housing defines, under the first source, a single bypass duct (10) connected to the first mixing zone (14), the bypass duct and the first mixing zone having a span in the lateral direction which more or less coincides with that of the first source, and at least one first diversion duct (91) and one second diversion duct (92) extending respectively from a volume (12) situated immediately downstream of the first source (5) and from the bypass duct (10) in order to lead to the second mixing zone (93), the said diversion ducts and the second mixing zone being laterally offset from the first source.

22. Installation according to one of Claims 1 to 3, in which the housing (200) defines, under the first source, a first bypass duct (205) connected to the first mixing zone (210) and a second bypass duct (208) leading to the second mixing zone (214) and situated under the first bypass duct.

23. Installation according to Claim 22, in which the said bypass ducts and the said mixing zones have a span in the lateral direction that coincides more or less with that of the first source, the housing (200) further defining, under the first source, at least one diversion duct (215) leading from a volume (211) situated immediately downstream of the first source to lead to the second mixing zone, the said diversion duct being laterally offset from the first source.

24. Installation according to one of the preceding claims, in which there is, for regulating the flow rate of the first air flow at the inlet to the first mixing zone (210), a shutter (305) capable of pivoting about an axis (306) situated within this zone, this shutter being of a cylindrical shape with a generatrix parallel to the said axis and having, in cross section, an arcuate central region (307) centred on the axis and connected to two marginal regions that diverge from the axis, the said marginal regions (308, 309) coming to bear against a dividing wall to define a sealed closed position of the shutter.
